**Europäisches Patentamt**

(19) **European Patent Office**

**Office européen des brevets**

(11) Numéro de publication: **0 072 279**

**B1**

(12) # FASCICULE DE BREVET EUROPÉEN

(45) Date de publication du fascicule du brevet: **15.01.86**

(51) Int. Cl.⁴: **G 01 T 7/04**

(21) Numéro de dépôt: **82401352.8**

(22) Date de dépôt: **20.07.82**

(54) Dispositif déprimogène et appareil de détection d'aérosols utilisant un tel dispositif.

(30) Priorité: **24.07.81 FR 8114430**

(43) Date de publication de la demande:
**16.02.83 Bulletin 83/7**

(45) Mention de la délivrance du brevet:
**15.01.86 Bulletin 86/3**

(84) Etats contractants désignés:
**BE DE GB IT**

(56) Documents cité:
**FR-A-2 244 093**
**GB-A-2 064 105**
**US-A-3 130 920**

**Livre "PRATIQUE DE LA MESURE ET DU CONTROLE DANS L'INDUSTRIE", TOME III; AUTEUR: J. BURTON; EDITEUR: DUNOD (PARIS, 1964) pages 408, 409**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Charuau, Jean, 13, Allée du Bois de la Cyprenne, F-91400 Orsay (FR)**

(74) Mandataire: **Mongrédien, André, c/o BREVATOME 25, rue de Ponthieu, F-75008 Paris (FR)**

## Description

La présente invention a pour objet un dispositif déprimogène apte à créer une dépression dans un aérosol ainsi qu'un appareil de détection d'aérosols et notamment d'aérosols de particules solides émettrices de rayons α utilisant un tel dispositif.

Elle a plus spécialement pour objet un appareil de détection d'aérosols équipé d'un dispositif déprimogène qui permette de créer une dépression dans la chambre de mesure tout en assurant le réentraînement des particules qui pourraient se déposer sur les parois du dispositif déprimogène.

La détection d'aérosols émetteurs de particules α s'effectue généralement à partir de leur prélèvement sur un filtre. Celui-ci est placé dans une chambre fermée et fait face à la surface sensible d'un détecteur: entre ces deux surfaces une distance x est nécessaire pour permettre l'écoulement de l'air contenant les aérosols sans polluer la tete de mesure et pour obtenir un prélèvement homogène sur le filtre. Cependant, lorsque la distance x augmente, la précision de la mesure diminue et la résolution du détecteur devient plus mauvaise: il est alors difficile de différencier la mesure des contaminants d'une énergie donnée (les isotopes 238 et 239 du plutonium par exemple) de celle d'autres émetteurs α constituant un bruit de fond (par exemple les descendants solides du radon tels que RaA et RaC'). On détermine donc une distance optimale telle que l'écoulement de l'aérosol et les performances de la mesure soient satisfaisants.

Cependant, pour une distance source-détecteur donnée, la résolution de l'appareil peut etre améliorée en introduisant l'aérosol dans la chambre de mesure à une pression inférieure à la pression atmosphérique.

Le document GB-A-2 064 105 décrit un dispositif de détection d'aérosols comportant une chambre équipée d'un filtre de prélèvement et d'un détecteur de rayonnement. Le tuyau d'arrivée de l'aérosol est équipé d'une vanne à étranglement réglable qui permet de créer une dépression dans l'écoulement.

Or, un tel dispositif présente encore des inconvénients car une fraction non négligeable des particules de l'aérosol peut être retenue dans le dispositif déprimogène par adhésion sur les parois de celui-ci. La fraction retenue, variable avec la dimension des particules et avec la vitesse de l'écoulement, peut atteindre 50 % pour les particules de diamètre supérieur à 1 µm. Ainsi, la granulométrie des particules qui se déposent sur le filtre n'est plus représentative de l'aérosol, ce qui fausse les mesures.

D'autre part, on connaît des dispositifs déprimogènes comportant un tube de Venturi, tel par exemple que celui décrit dans le libre de J. BURTON "Pratique de la mesure et du contrûle dans l'industrie", DUNOD (Paris) 1964, pages 408 et 409. Ce dispositif comporte une sonde de prélèvement placée dans un courant gazeux et suivie d'un tube de Venturi, un filtre étant interposé entre la sonde et le tube de Venturi le que entrâine, que seul le gay porteur—et non les particules de l'aérosol—s'écoule à travers le tube de Venturi. On mesure le débit du gaz porteur en mesurant la différence de pression entre la partie amont et le col du Venturi tandis qu'en mesurant le poids des particules retenues par le filtre, on détermine le taux de poussières. Cependant, même si on supprimait le filtre, on risquerait encore de voir des particules solides se déposer sur les parois du Venturi. La présente invention a précisément pour but d'éliminer ces inconvénients grâce à un dispositif déprimogène à tube de Venturi plus performant que les dispositifs de l'art antérieur. Selon l'invention, l'aérosol s'écoule à travers le tube de Venturi et les éléments structurels de ce tube de Venturi sont conçus de façon à ce qu'il s'exerce sur les particules de l'aérosol une forme d'entraînement supérieure à la force tendant à faire adhérer ces particules sur les parois du tube de Venturi.

L'invention a également pour objet un appareil de détection d'aérosols utilisant un tel dispositif.

Selon la principale caractéristique de cet appareil, celui-ci, du type comportant une chambre de mesure équipée d'un filtre de prélèvement et d'un détecteur de rayonnement, ladite chambre étant en communication avec l'extérieur par une canalisation d'entrée et une canalisation de sortie, se caractérise en ce que la canalisation d'entrée est équipée d'un tube de Venturi permettant de créer une dépression dans la chambre de mesure, en ce que ledit aérosol s'écoule à travers ce tube de Venturi et en ce que les, ééments structurels du tube de Venturi sont conqus de façon à ce qu'il 'exerce sur les particules solides de l'aérosol une force d'entraînement supérieure à la force tendant à faire adhérer lesdites particules sur les parois du tube de Venturi.

Le fait de placer en amont de la chambre de mesure un tube de Venturi permet d'obtenir facilement dans celui-ci une vitesse d'écoulement proche de celle du son et d'éviter le dépôt des grosses particules sur les parois du tube car, dans ces conditions, la force d'entraînement des particules est supérieure à la force d'adhésion de celles-ci sur les parois.

Selon une autre caractéristique de l'appareil, l'angle au sommet du convergent du tube de Venturi est inférieur à 30° et l'angle au sommet du divergent est inférieur à 10°.

Selon une autre caractéristique de cet appareil, le col du Venturi et le divergent entier sont réalisés en une seule pièce, sans raccord, de manière à ne pas détruire la couche limite de l'écoulement turbulent.

Selon une autre caractéristique de l'appareil de détection d'aérosols conforme à l'invention, les parois internes des différents éléments du tube de Venturi sont lisses et constituées d'un matériau conducteur de l'électricité.

Enfin, selon une dernière caractéristique de cet appareil destiné à une utilisation en présence d'huiles ou substances analogues, les parois internes des différents éléments du tube de Venturi sont recouvertes d'un agent tensio-actif, qui est de préférence un produit contenant du fluor.

Un excellent état de surface du divergent est une condition impérative du bon rendement du dispositif; celui-ci exige de plus des parois conductrices de l'électricité afin de permettre l'écoulement des charges électriques parasites qui entraîneraient le dépôt, par attraction électrostatique, des particules chargées. La paroi doit donc être métallique ou recouverte d'un matériau conducteur.

D'autre part, les parois ne doivent pas etre polluées par d'éventuelles gouttelettes d'huile ou d'autres liquides aspirées accidentellement, ce qui augmenterait considérablement les forces d'adhésion des aérosols traversant le dispositif. Pour minimiser cet inconvénient, la paroi peut être avantageusement revetue d'un film sec d'un agent tensio-actif dont la faible énergie de surface provoque une bonne répulsion vis-à-vis des huiles et solutions aqueuses et évite la migration de gouttelettes sur la paroi. En effet, des mesures faites au microscope ont montré par exemple que le coefficient d'étalement de gouttelettes d'huile de Dioctyle Phtalate (DOP) de 10 μm est réduit a environ 1,5. Un tel revetement peut aussi éviter la formation d'un film liquide adsorbé par la paroi lors du prélèvement en atomsphère saturée en vapeur d'eau: ce phénomène, qui apparaît pour des taux d'humidité relative supérieurs à 70%, accroit l'adhérence des particules qui sont alors soumises à des forces capillaires. Du fait de la vitesse d'écoulement très élevée de l'aérosol, le gaz subit une chute de température au niveau du col du tube de Venturi, ce qui provoque un risque accru d'apparition du phénomène.

Un autre avantage de la présence d'un tel agent tensio-actif est que, en abaissant considérablement l'adhérence des gouttelettes et en facilitant ainsi leur entraînement, on apporte une garantie supplémentaire quant à la conservation du bon état de surface de la paroi. Cependant le mode d'application de l'agent tensio-actif doit être tel que la couche déposée soit mince et parfaitement uniforme.

Parmi les agents tensio-actifs utilisables dans l'invention, les plus efficaces sont les agents fluorés. La méthode d'application la plus courante consiste à tremper le dispositif dans une solution d'un tel produit, puis à laisser évaporer le solvant: il se forme alors sur la paroi un film sec d'épaisseur voisine de 1μ qui est insoluble dans les solvants fluorés et peut supporter des températures allant jusqu'à 200°C environ. D'autre part, ce revetement présente une bonne tenue mécanique et ne modifie pas sensiblement les propriétés de conductivité électrique de la paroi.

D'autres caractéristiques et avantages de l'invention ressortiront de la description qui va suivre, donnée à titre purement illustratif et nullement limitatif, en référence aux dessins annexés dans lesquels:

- la figure 1 est une vue schématique en coupe d'un appareil de détection conforme à l'invention,
- la figure 2 est une vue agrandie, en coupe, du tube de Venturi utilisé dans l'appareil de l'invention, et
- la figure 3 est une courbe représentant, en échelle logarithmique et en fonction du débit en litre/minute, la fraction de particules retenue dans le tube de Venturi pour des particules de 6,1μ de diamètre.

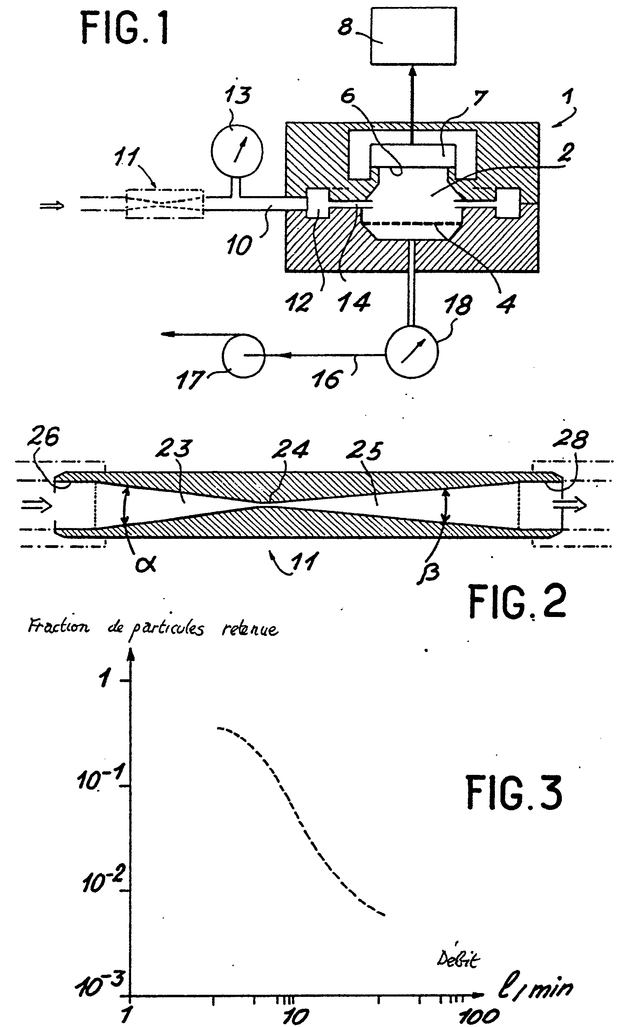

La figure 1 représente un appareil de détection d'aérosols émetteurs de particules α portant la référence générale 1 et comportant une chambre de mesure 2 dans laquelle se trouve un filtre de prélèvement 4 faisant face à la surface sensible 6 d'un detecteur 7 lui-même relié à un appareil de mesure 8. L'aérosol arrive par la canalisation 10 qui débouche dans un espace annulaire 12 entourant la chambre 2. Des passages radiaux 14 mettent l'espace 12 en communication avec celle-ci. Les particules de l'aérosol sont retenues par le filtre 4 tandis que le gaz est évacué par la canalisation 16. Cette dernière est munie d'une pompe d'aspiration 17 et d'un débitmètre 18.

Afin de créer une dépression dans la chambre de mesure, on place sur la canalisation d'arrivée 10 un dispositif déprimogène 11 capable d'introduire une perte de charge dans l'écoulement. Un manomètre 13, situé entre le dispositif 11 et la chambre 2, permet de connaître la pression à l'intérieur de celle-ci.

Le dispositif déprimogène utilisé dans l'appareil de détection selon l'invention apparaît plus en détail sur la figure 2. Sur cette figure, on voit qu'il s'agit d'un tube de Venturi comportant du côté amont un raccordement d'entrée cylindrique 26 et du côté aval un raccordement de sortie cylindrique 28. Ce tube de Venturi comporte également un convergent 23 d'angle au sommet α suivi d'une partie centrale cylindrique ou col 24 dont la longueur est égale au diamètre et d'un divergent d'angle au sommet β. Le diamètre du col est calculé de manière à obtenir le débit desiré lorsque la vitesse de l'air le traversant est sonique. Afin d'éviter tout décollement des lignes de flux, les dimensions du tube de Venturi sont calculées de telle sorte que l'angle α soit inférieur à 30° et l'angle β inférieur à 10°. Le col et le divergent doivent être exécutés en une seule pièce. On a réalisé un tel dispositif dans lequel l'angle α est égal à 21° et l'angle β à 7°. Les raccordements d'entrée et de sortie ont un diamètre de 6 mm tandis que la longueur et le diamètre du col 24 sont de 2 mm.

Ce dispositif a été expérimenté avec différents aérosols contenant chacun des particules de granulométrie homogène afin de déterminer la fraction de particules retenue en fonction de la vitesse d'écoulement et du diamètre de celles-ci. On a utilisé des aérosols mono-dispersés de sels d'ammonium de fluorscéine de diamètre 2,0, 4,1, 6,1 et 9,0 μm respectivement.

Le banc d'essai utilisé pour ces expériences comporte tout d'abord un générateur de particules fonctionnant sur le principe de la fragmentation contrôlée d'un jet liquide cylindrique produit à travers un orifice de très petit diamètre. La fragmentation du jet est réalisée par une céramique piézoélectrique qui met en vibration une membrane percée d'un orifice microscopique. On obtient ainsi des gouttelettes de dimensions homogènes constituées de sels d'ammonium de fluorescéine en solution dans de l'eau et de l'alcool. Après évaporation du solvant, il reste des particules solides dont la taille est fonction de la concentration de la solution. Ce mode de production, s'il présente l'avantage de permettre l'obtention d'une granulométrie homogène, a cependant l'inconvénient d'entraîner une charge électrique élevée des particules: celle-ci est neutralisée à l'aide d'une source β- de krypton 85. Les particules parviennent ensuite au dispositif déprimogène conforme à l'invention à travers un cûne de raccordement et un tube cylindrique de liaison précédent le raccordement d'entrée du dispositif et ayant le même diamètre que celui-ci. Ce tube de liaison a une longueur égale à 20 fois son diamètre afin de régulariser l'écoulement. En aval du dispositif se trouve un autre tube cylindrique, prolongeant le raccordement de sortie et ayant le même diamètre que celui-ci et une longueur égale à 20 fois ce diamètre. Enfin, un autre raccordement conique permet aux particules d'arriver sur un filtre de prélèvement. Ce dernier est en fibre de verre tandis que l'ensemble du circuit d'écoulement des aérosols, y compris le dispositif selon l'invention, est entièrement métallique (laiton) et relié à la terre.

Les aérosols traversent le dispositif pendant un temps variable en fonction de la taille des particules et du débit choisi. Une fois l'essai terminé, le dispositif déprimogène ainsi que le filtre de prélèvement sont mis à tremper dans une solution d'eau permutée ammoniaquée: la concentration des solutions en sels d'ammonium de fluorescéine est mesurée à l'aide d'un fluorimètre à lampe au xénon, ce qui permet de connaître la masse de particules déposées respectivement sur le filtre et dans le dispositif.

Les résultats pour différents débits et différents diamètres de particules sont donnés dans le tableau joint en annexe. On voit tout d'abord que, pour les petites particules de 2μm, la fraction retenue est de l'ordre de 1 à 2% quelles que soient les conditions de débit et de pression.

Au contraire, pour les particules plus grosses, le dépôt est très important pour un faible débit: sur la courbe de la figure 3, correspondant à des particules de diamètre 6,1 μm, on voit que le dépôt est très important (30% pour un faible débit de 4,4 l/min.). Lorsque le débit croît, la fraction déposée diminue pour atteindre 1% à 20 l/min. et descend même jusqu'à 0,4% lorsqu'on atteint le débit maximal de 32,8 l/min. (cette valeur correspond au débit maximal possible qui se trouve être automatiquement régulé du fait du régime sonique du dispositif utilisé pour les essais). L'examen du tableau de résultats montre encore qu'à ce débit maximal de 32,8 l/min. la fraction retenue est plus faible pour les particules les plus grosses. Des mesures complémentaires faites en fin d'expérience ont montré que le dépôt de particules sur les cônes et les tubes de raccordement situes en amont et en aval du dispositif sont faibles et n'entraînent pas d'erreurs importantes sur les résultats qui viennent d'être présentés.

Ainsi, le dispositif selon l'invention présente des avantages particulièrement intéressants puisqu'il permet de créer une dépression dans la chambre de mesure d'un détecteur d'aérosols émetteurs de particules α tout en réduisant à une valeur inférieure à 2% la fraction de particules retenue dans le dispositif déprimogène quelle que soit la dimension de celles-ci, ce qui évite les erreurs de mesure dues à une variation de la granulométrie des particules qui pénètrent dans la chambre: ce dernier résultat est obtenu à partir d'une certaine valeur du débit d'aspiration par ailleurs nécessaire à l'obtention de la dépression.

Il est bien entendu que des modifications sont possibles. C'est ainsi que l'homme de l'art pourra adapter les dimensions des différents éléments du dispositif (diamètre des raccordements d'entrée et de sortie, angle au sommet du convergent et du divergent du tube de Venturi) en fonction du diamètre des particules et du débit désiré.

D'autre part, si on a décrit plus particulièrement un exemple dans lequel le dispositif déprimogène était associé à un appareil de détection d'aerosols, il est bien entendu qu'un tel dispositif peut être associé à d'autres types d'appareils et qu'il est utilisable dans toutes les applications où il est nécessaire de créer une dépression dans un écoulement d'aérosol et où l'on veut éviter que les particules de cet aérosol se déposent sur les parois du dispositif déprimogène.

**CONDITIONS ET RESULTATS DES MESURES DE RETENTION D'AEROSOLS MONODISPERSES**

| Diamètre des particules µm | Débit de l'air $Nl.mln^{-1}$ | Ecoulement au passage du col du Venturi | | Perte de charge $\Delta P$, mbar | Fraction retenue |
|---|---|---|---|---|---|
| | | vitesse $m.s^{-1}$ | Nombre de Reynolds | | |
| 2,0 | 6,8 | 37 | 4.930 | 5,5 | $1,75.10^{-2}$ |
| – | 32,8 | 260 | 23.570 | 500 | $1,29.10^{-2}$ |
| 4,1 | 6,8 | 37 | 4.930 | 5,5 | $22,3 .10^{-2}$ |
| – | 32,8 | 260 | 23.570 | 500 | $0,87.10^{-2}$ |
| 6,1 | 4,4 | 24 | 3.200 | 2,9 | $28,6 .10^{-2}$ |
| – | 6,8 | 37 | 4.930 | 5,5 | $22,0 .10^{-2}$ |
| – | 6,8 | 37 | 4.930 | 5,5 | $16,1 .10^{-2}$ |
| – | 10,5 | 58 | 7.730 | 12,5 | $4,0 .10^{-2}$ |
| – | 15,0 | 85 | 10.770 | 24,0 | $1,9 .10^{-2}$ |
| – | 20,4 | 122 | 14.640 | 49,5 | $1,1 .10^{-2}$ |
| – | 28,0 | 188 | 20.050 | 100 | $0,22.10^{-2}$ |
| – | 32,8 | 260 | 23.570 | 500 | $0,43.10^{-2}$ |
| 9,0 | 4,4 | 24 | 3.200 | 2,9 | $19,0 .10^{-2}$ |
| – | 6,8 | 37 | 4.930 | 5,5 | $8,6 .10^{-2}$ |
| – | 32,8 | 260 | 23.570 | 500 | $0,23.10^{-2}$ |

0 072 279

**Revendications**

1. Dispositif déprimogène comportant un tube de Venturi (11) et apte à créer une dépression dans un aérosol s'écoulant à travers ce dispositif, caractérisé en ce que ledit aérosol s'écoule à travers ce tube de Venturi et en ce que les éléments structurels dudit tube de Venturi (11) sont conçus de façon à ce qu'il s'exerce sur les particules de l'aérosol une force d'entraînement supérieure à la force tendant à faire adhérer lesdites particules sur les parois du tube de Venturi (11).

2. Appareil pour la détection d'un aérosol et plus particulièrement d'un aérosol de particules solides émettrices de rayons α, du type comportant une chambre de mesure (2) équipée d'un filtre de prélèvement (4), et d'un détecteur de rayonnement (7), ladite chambre (2) étant en communication avec l'extérieur par une canalisation d'entrée (10) et une canalisation de sortie (16), caractérisé en ce que la canalisation d'entrée (10) est équipée d'un tube de Venturi (11) permettant de créer une dépression dans la chambre de mesure (2) en ce que ledit aérosol s'écoule à travers ce tube de Venturi et en ce que les éléments structurels dudit tube de Venturi (11) sont conçus de façon à ce qu'il s'exerce sur les particules solides de l'aerosol une force d'entraînement supérieure à la force tendant à faire adhérer lesdites particules sur les parois du tube de Venturi (11).

3. Appareil selon la revendication 2, caractérisé en ce que le tube de Venturi (11) comporte un convergent (23) d'angle au sommet inférieur à 30°, une partie centrale cylindrique ou col (24) dont la longueur est égale au diamètre et un divergent (25) d'angle au sommet inférieur à 10°.

4. Appareil selon la revendication 3, caractérisé en ce que l'angle au sommet du convergent (23) du tube de Venturi est égal à 21° et l'angle au sommet du divergent (25) est égal à 7°.

5. Appareil selon l'une quelconque des revendications 2 à 4, caractérisé en ce que les parois internes du tube de Venturi sont lisses et constituées d'un matériau conducteur de l'électricité.

6. Appareil selon l'une quelconque des revendications 2 à 5, caractérisé en ce que le col (24) et le divergent (25) du tube de Venturi (11) forment une seule pièce sans raccord.

7. Appareil selon l'une quelconque des revendications 2 à 6, caractérisé en ce que les parois internes du tube de Venturi sont recouvertes d'un agent tensio-actif.

8. Appareil selon la revendication 7, caractérisé en ce que ledit agent tensio-actif est un produit contenant du fluor.

**Patentansprüche**

1. Unterdruckeinrichtung mit einem Venturirohr, die dazu eingerichtet ist, einen Unterdruck in einem Aerosol hervorzurufen, das durch die Einrichtung ausströmt, dadurch gekennzeichnet, daß das genannte Aerosol durch das Venturirohr ausströmt und daß die das Venturirohr (11) bildenden Elemente so ausgebildet sind, daß es auf die festen Aerosolpartikel eine Antriebskraft ausübt, die höher als die Kraft ist, die dazu neigt, die genannten Partikel an den Wänden des Venturirohrs (11) anhaften zu lassen.

2. Gerät zur Ermittlung eines Aerosols und spezieller eines Aerosols aus Feststoffpartikeln, die α-Strahlen abgeben, enthaltend eine Meßkammer (2), die mit einem Entnahmefilter (4) und einem Strahlendetektor (7) ausgerüstet ist, wobei die Kammer (2) mit der Umgebung über einen Eintrittskanal (10) und einen Austrittskanal (16) in Verbindung steht, dadurch gekennzeichnet, daß der Eintrittskanal (10) mit einem Venturirohr (11) ausgerüstet ist, das die Erzeugung eines Unterdrucks in der Meßkammer (2) gestattet, daß das genannte Aeorosol durch das Venturirohr ausströmt und daß die das Venturirohr (11) bildenden Elemente so ausgebildet sind, daß es auf die festen Aerosolpartikel eine Antriebskraft ausübt, die höher als die Kraft ist, die dazu neigt, die genannten Partikel an den Wänden des Venturirohrs (11) anhaften zu lassen.

3. Gerät nach Anspruch 2, dadurch · gekennzeichnet, daß das Venturirohr einen Konvergenzbereich eines Kegelwinkels von weniger als 30°, einen zentralen zylindrischen Bereich oder Durchlaß (24), dessen Länge gleich dem Durchmesser ist, und einen Divergenzbereich (25) eines Kegelwinkels von weniger als 10° aufweist.

4. Gerät nach Anspruch 3, dadurch gekennzeichnet, daß der Kegelwinkel des Konvergenzbereiches (23) des Venturirohres gleich 21° und der Kegelwinkel des Divergenzbereiches (25) gleich 7° beträgt.

5. Gerät nach einem der Ansprüche 2 bis 4, dadurch gekennzeichnet, daß die Innenwände des Venturirohres glatt sind und aus einem elektrisch leitfähigen Material bestehen.

6. Gerät nach einem der Ansprüche 2 bis 5, dadurch gekennzeichnet, daß der Durchlaß (24) und der Divergenzbereich (25) des Venturirohrs (11) ein einziges Stück ohne Übergang bilden.

7. Gerät nach einem der Ansprüche 2 bis 6, dadurch gekennzeichnet, daß die Innenwände des Venturirohrs mit einem spannungsaktiven Wirkstoff bedeckt sind.

8. Gerät nach Anspruch 7, dadurch gekennzeichnet, daß der spannungsaktive Wirkstoff ein Fluor enthaltendes Produkt ist.

**Claims**

1. Pressure-reducing apparatus comprising a Venturi tube (11) and adapted to produce a pressure decrease in a flowing aerosol, said aerosol flowing across said Venturi tube, and the structural elements of said Venturi tube (11) being formed such that they exercise on the aerosol particles an entraining force greater than the force tending to cause said particles to adhere to the walls of the Venturi tube (11).

2. Apparatus for the detection of an aerosol, and more particularly an aerosol of solid particles emitting x-rays, of the type having a measuring chamber (2) equipped with a sampling filter (4), and a radiation detector (7) said chamber (2) being in communication with the exterior through an inlet conduit (10) and an outlet conduit (16), characterised in that said inlet conduit (10) is equipped with a Venturi tube (11) adapted to produce a pressure drop in the measurement chamber (2), and in that said aerosol flows through the Venturi tube, and in that the structural elements of said Venturi tube (11) are formed such that they exercise on the solid particles of the aerosol, an entraining force greater than the force tending to cause said particles to adhere to to the walls of the Venturi tube (11).

3. Apparatus according to Claim 2, characterised in that the Venturi tube (11) has a convergent section (23) having a peak angle less than 30°, a central cylindrical portion or neck (24) whose length is equal to its diameter, and a divergent section (25) having a peak angle less than 10°.

4. Apparatus according to Claim 3, characterised in that said peak angle of the convergent section (23) of the Venturi tube is equal to 21° and the peak angle of the divergent section (25) is equal to 7°.

5. Apparatus according to any one of Claims 2 to 4, characterised in that the internal walls of the Venturi tube are smooth and formed from an electricallyconductive material.

6. Apparatus according to any one of Claims 2 to 5 characterised in that the neck (24) and the divergent section (25) of the Venturi tube (11) form a single member without joints.

7. Apparatus according to any one of claims 2 to 6, characterised in that the internal walls of the Venturi tube are covered with a surface-active agent.

8. Apparatus according to Claim 7, characterised in that said surface-active agent is a material containing fluorine.

# FIG.1

# FIG.2

Fraction de particules retenue

# FIG.3

Débit

ℓ/min